# EUROPEAN PATENT APPLICATION

(11) **EP 4 797 769 A1**
(43) Date of publication of application: **26.08.2026**
(21) Application number: 24880941.0
(22) Date of filing: 09.04.2024
(51) Int. Cl.: H04W 24/02

(54) **COMMUNICATION METHOD, COMMUNICATION DEVICE AND STORAGE MEDIUM**

(30) Priority: 26.10.2023 CN 202311407226
(71) Applicant: ZTE Corporation, Shenzhen, Guangdong 518057 (CN)
(72) Inventor: LIU, Wenfeng, Shenzhen, Guangdong 518057 (CN); LU, Zhaohua, Shenzhen, Guangdong 518057 (CN); XIAO, Huahua, Shenzhen, Guangdong 518057 (CN); LI, Yong, Shenzhen, Guangdong 518057 (CN); LI, Lun, Shenzhen, Guangdong 518057 (CN); GAO, Bo, Shenzhen, Guangdong 518057 (CN)
(74) Representative: Ziebig Hengelhaupt Intellectual Property Attorneys Patentanwaltskanzlei PartGmbB
(86) International application number: PCT/CN2024/086731
(87) International publication number: WO 2025/086556

(57) **Abstract**

Embodiments of the present disclosure provide a communication method, a communication device and a storage medium. The method is applied to a first node, and the method comprises: sending assistance information, wherein the assistance information is used for assisting a second node in identifying a first information processing mode; receiving a monitoring result of a second information processing mode sent by the second node, wherein the second information processing mode belongs to the first information processing mode; and sending a management instruction of the second information processing mode to the second node on the basis of the monitoring result.

## Description

The present disclosure claims priority to Chinese Patent Application No. 202311407226.9, filed on October 26, 2023, the entire content of which is incorporated into the present application by reference.

### TECHNICAL FIELD

The present disclosure relates to the field of communication technologies, and in particular, to a communication method, a communication apparatus, and a storage medium.

### BACKGROUND

Wireless communication systems are widely used in people's daily lives and production. For example, wireless communication systems are applied to video transmission, voice transmission, positioning, machine-to-machine (M2M) communication in industrial field, device-to-device (D2D) communication, and communication between vehicles and other devices in the vehicle to everything (V2X). In radio communication system technology, beam management, including beam scanning, beam tracking, and beam recovery, is required.

### SUMMARY

In a first aspect, the present disclosure provides a communication method, applied to a first node, and the method includes:
sending auxiliary information, where the auxiliary information is used to assist a second node in identifying a first information processing mode;
receiving a monitoring result of a second information processing mode sent from the second node, where the second information processing mode belongs to the first information processing mode; and
sending a management instruction for the second information processing mode to the second node based on the monitoring result.

In a second aspect, the present disclosure provides another communication method, applied to a second node, and the method includes:
receiving auxiliary information, where the auxiliary information is used to assist the second node in identifying a first information processing mode;
performing performance monitoring on the first information processing mode based on the auxiliary information to obtain a monitoring result of a second information processing mode, where the second information processing mode belongs to the first information processing mode;
sending the monitoring result to a first node; and
receiving a management instruction for the second information processing mode.

In a third aspect, the present disclosure provides a communication apparatus, the apparatus is applied to a first node, and the apparatus includes a sending module, and a receiving module;
the sending module is configured to send auxiliary information, where the auxiliary information is used to assist a second node in identifying a first information processing mode;
the receiving module is configured to receive a monitoring result of a second information processing mode sent from the second node, where the second information processing mode belongs to the first information processing mode;
the sending module is further configured to send a management instruction for the second information processing mode to the second node based on the monitoring result.

In a fourth aspect, the present disclosure further provides another communication apparatus, the apparatus is applied to a second node, and the apparatus includes a receiving module, a processing module and a sending module;
the receiving module is configured to receive auxiliary information, where the auxiliary information is used to assist the second node in identifying a first information processing mode;
the processing module is configured to perform performance monitoring on the first information processing mode based on the auxiliary information to obtain a monitoring result of a second information processing mode, where the second information processing mode belongs to the first information processing mode;
the sending module is configured to send the monitoring result to a first node;
the receiving module is further configured to receive a management instruction for the second information processing mode.

In a fifth aspect, the present disclosure provides a communication apparatus. The communication apparatus includes: a processor and a memory; the memory has stored instructions executable by the processor; the processor is configured to, upon executing the instructions, enable the communication apparatus to implement the method provided in any one of the methods provided in the first aspect or the second aspect.

In a sixth aspect, a computer readable storage medium is provided. The computer readable storage medium stores computer instructions, and the computer instructions, upon being executed on a computer, enable the computer to perform the method provided in any one of the first aspect or the second aspect.

In a seventh aspect, a computer program product containing computer instructions is provided, and the computer instructions, upon being executed on a computer, enable the computer to perform the method provided in any one of the first aspect or the second aspect.

### BRIEF DESCRIPTION OF THE DRAWINGS

The accompanying drawings are used to provide a further understanding of the technical solutions of the present disclosure, and constitute a part of the specification. The accompanying drawings are used to explain the technical solutions of the present disclosure together with the embodiments of the present disclosure, and do not constitute a limitation on the technical solutions of the present disclosure.
FIG. 1 is a schematic diagram of an architecture of a communication system provided in the embodiments of the present disclosure.
FIG. 2 is a flow schematic diagram of a communication method provided in the embodiments of the present disclosure.
FIG. 3 is a flow schematic diagram of another communication method provided in the embodiments of the present disclosure.
FIG. 4 is a flow schematic diagram of yet another communication method provided in the embodiments of the present disclosure.
FIG. 5 is a flow schematic diagram of yet another communication method provided in the embodiments of the present disclosure.
FIG. 6 is a flow schematic diagram of yet another communication method provided in the embodiments of the present disclosure.
FIG. 7 is a schematic diagram of a composition of a communication apparatus provided in the embodiments of the present disclosure.
FIG. 8 is a schematic diagram of a composition of another communication apparatus provided in the embodiments of the present disclosure.
FIG. 9 is a structural schematic diagram of a communication apparatus provided in the embodiments of the present disclosure.

### DETAILED DESCRIPTION

The technical solutions in the embodiments of the present disclosure will be described clearly and completely with reference to the accompanying drawings in the embodiments of the present disclosure. However, the described embodiments are merely some but not all of embodiments of the present disclosure. All other embodiments made on the basis of the embodiments of the present disclosure by a person of ordinary skill in the art without paying any creative effort shall be included in the protection scope of the present disclosure.

In the description of the present disclosure, unless otherwise specified, the symbol "/" means "or", and for example, A/B may represent A or B. "And/or" herein is only used to describe an associated relationship between associated objects, representing that there may be three relationships. For example, A and/or B may represent three cases: only A, only B, and both A and B. Additionally, "at least one" means one or more, and "multiple/a plurality of/the plurality of" means two or more. Wordings, such as "first" and "second", etc., do not limit the quantity and execution order, and the wordings, such as "first" and "second", etc., also do not necessarily limit different items they defined.

It should be noted that in the present disclosure, the words such as "exemplary/exemplarily" or "for example (e.g.)", etc., are used to present an example, illustration, or explanation. Any embodiment or design solution described with "exemplary/exemplarily" or "for example" in the present disclosure should not be construed as preferred or advantageous over other embodiments or design solutions. Rather, the usage of the words such as "exemplary/exemplarily" or "for example", etc., is intended to present relevant concepts in a certain manner.

At present, application of artificial intelligence and deep learning (DL) in wireless air interface related fields has received widespread attention and importance from the industry. Examples include channel state information feedback, beam management, and positioning based on artificial intelligence/deep learning. Taking beam management based on artificial intelligence algorithms as an example, the base station only needs to transmit reference signal resources in part of the beam space or at partial time instants, and use the artificial intelligence algorithm to predict a full beam space information and an optimal beam at all times. There is no need to scan all beams in a codebook, which may reduce beam training overhead and terminal measurement power consumption. However, due to limitations of a generalization of artificial intelligence models and constrained computing resources, models trained on a terminal side can generally only operate in specific configurations, scenarios, sites, or environments, making it impossible for the base station to accurately indicate a model suitable for a current environment to perform operations.

In view of this, the present disclosure provides a communication method. The method includes: sending, by a first node, auxiliary information, where the auxiliary information is used to assist a second node in identifying a first information processing mode; receiving, from the second node, a monitoring result of a second information processing mode, where the second information processing mode belongs to the first information processing mode; and, sending a management instruction for the second information processing mode to the second node based on the monitoring result. In this way, multiple candidate information processing modes (e.g., multiple candidate models) may be indicated in advance, and feasibility testing on the information processing modes may be initiated before information processing operations are carried out, so as to determine an information processing mode suitable for the current environment to perform operations, thereby improving an accuracy of information processing.

The technical solution provided in the embodiments of the present disclosure may be applied to various mobile communication networks, for example, new radio (NR) mobile communication networks using the 5th generation mobile networks (5G), future mobile communication networks (including but not limited to various 6th generation mobile networks, 6G), or multiple communication convergence systems, etc., which is not limited in the embodiments of the present disclosure.

A network architecture of a mobile communication network (including but not limited to 3G, 4G, 5G and future mobile communication networks) in the embodiments of the present disclosure may include a network-side device (e.g., including but not limited to a base station) and a receiving-side device (e.g., including but not limited to a terminal). And it should be understood that, in this example, in downlink, a first communication node (also referred to as a first communication node device) may be a base station side device, and a second communication node (also referred to as a second communication node device) may be a terminal side device, and of course, in uplink, the first communication node may be the terminal side device, and the second communication node may be the base station side device. In a case where two communication nodes perform a device-and-device communication, both the first communication node and the second communication node may be base stations or terminals. The first communication node and the second communication node may be referred to as the first node and the second node for short, respectively.

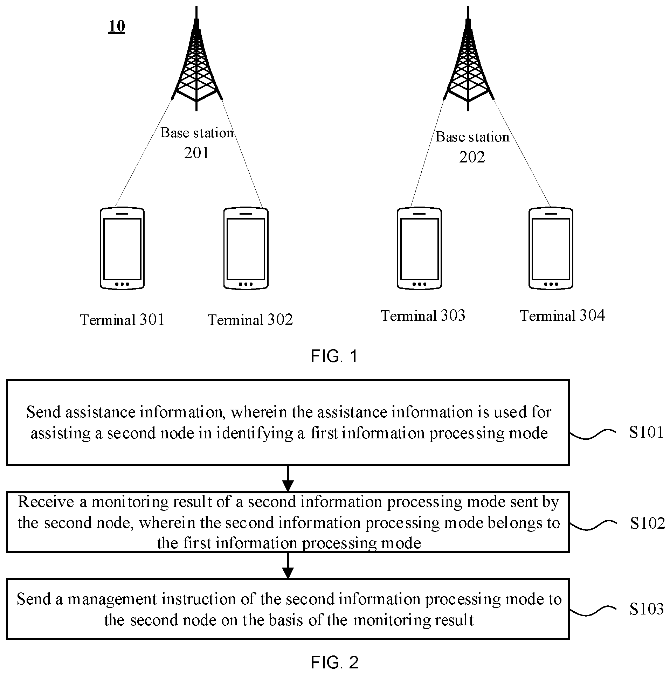

Exemplarily, taking the network side device as a base station and a receiving side device as a terminal as an example, FIG. 1 shows a schematic diagram of an architecture of a communication system provided in the embodiments of the present disclosure. As shown in FIG. 1, a communication system 10 includes a plurality of base stations (e.g., base station 201 and base station 202) and a plurality of terminals (e.g., terminal 301, terminal 302, terminal 303, and terminal 304). The plurality of base stations and the plurality of terminals may be in communication connection. That is, a base station may provide network services to terminals in a cell, and may also provide network services to terminals in a plurality of cells at a same time.

In some embodiments, a base station may be a base station in long term evolution (LTE), long term evolution advanced (LTEA), or an evolved Node B (eNB or eNodeB), a base station device in a 5G network, or a base station in a future communication system. The base station may include various macro base stations, micro base stations, home base stations, radio remote devices, reconfigurable intelligent surfaces (RISs), routers, wireless fidelity (WIFI) devices, or various network-side devices such as primary cells and secondary cells.

In some embodiments, a terminal may be a device with wireless transceiving functions, which may be deployed on land, including indoors or outdoors, handheld, wearable or vehicle-mounted; may further be deployed on the water surface (e.g., on ships, etc.); and may further be deployed in the air (e.g., on airplanes, balloons and satellites, etc.). The terminal may be a mobile phone, a pad, a computer with wireless transceiving functions, a virtual reality (VR) terminal, an augmented reality (AR) terminal, a wireless terminal in industrial control, a wireless terminal in self-driving, a wireless terminal in remote medical, a wireless terminal in smart grid, a wireless terminal in transportation safety, a wireless terminal in smart city, a wireless terminal in smart home, etc. The embodiments of the present disclosure do not limit the application scenarios. The terminal sometimes may also be referred to as a user, a user equipment (UE), an access terminal, a UE unit, a UE station, a mobile station, a mobile platform, a remote station, a remote terminal, a mobile device, a UE terminal, a wireless communication device, a UE agent, or a UE apparatus, etc., which is not limited to the embodiments of the present disclosure.

In some embodiments, a high-layer signaling includes, but is not limited to a radio resource control (RRC), a media access control - control element (MAC CE), and other high-layer signalings above a physical layer. A physical layer signaling includes, but is not limited to: downlink control information and uplink control information. In an example, the physical layer signaling may be transmitted between the base station and the terminal on a physical downlink control channel (PDCCH) and on a physical uplink control channel (PUCCH).

In some embodiments, an indicator of a parameter may also be referred to as an index or an identifier (ID), and concepts of indicator, identifier and index are equivalent. For example, a resource identifier of a wireless system may also be referred to as a resource indication or a resource index. The resource identifier of the wireless system includes but is not limited to one of: an identifier corresponding to a reference signal resource, a reference signal resource group, a reference signal resource configuration, a channel state information (CSI) report, a CSI report set, a terminal, a base station, a panel, a neural network, a sub-neural network, a neural network layer, etc. The base station may indicate an identifier of a resource or a group of resources to the terminal through various high-layer signalings or physical layer signalings. The terminal may feedback an identifier of a resource or a group of resources to the base station through various higher layer signalings and/or physical layer signalings.

In some embodiments, a slot may be a slot or a mini slot. A single slot or a mini slot includes at least one symbol. The symbol refers to a time unit in a subframe, a frame or a slot, for example, the symbol may be an orthogonal frequency division multiplexing (OFDM) symbol, a single-carrier frequency division multiple access (SC-FDMA) symbol, or an orthogonal frequency division multiple access (OFDMA) symbol.

In some embodiments, in order to calculate channel state information or perform channel estimation, mobility management, positioning, etc., the base station or user needs to transmit a reference signal (RS). The reference signal includes, but is not limited to: channel-state information reference signal (CSI-RS), which includes zero-power CSI-RS (ZP CSI-RS) and non-zero-power CSI-RS (NZP CSI-RS); channel-state information interference measurement (CSI-IM) signal; sounding reference signal (SRS); synchronization signal block (SSB); physical broadcast channel (PBCH); and synchronization signal block/physical broadcast channel (SSB/PBCH). NZP CSI-RS may be used to measure channel or interference. CSI-RS may also be used for tracking, and is called a tracking reference signal (CSI-RS for Tracking, TRS). CSI-IM is generally used to measure interference, and SRS is used to measure an uplink channel. In addition, a set of resource elements (RE) included in a time-frequency resource for transmitting a reference signal is referred to as a reference signal resource, such as a CSI-RS resource, an SRS resource, a CSI-IM resource, and an SSB resource. In the document, SSB includes a synchronization signal block and/or a physical broadcast channel.

In some embodiments, in order to save signaling overhead, multiple reference signal resources may be divided into multiple sets (e.g., CSI-RS resource set, CSI-IM resource set, SRS resource set). A reference signal resource set includes at least one reference signal resource, and multiple reference signal resource sets may all come from the same reference signal resource setting (e.g., CSI-RS resource setting, SRS resource setting, where CSI-RS resource setting may be merged with CSI-IM resource setting and both are called CSI-RS resource setting) to configure parameter information.

In some embodiments, a beam includes a transmitting beam, a receiving beam, a receiving beam and transmitting beam pair, and a transmitting beam and receiving beam pair. A beam index may be replaced by a resource index (e.g., a reference signal resource index), as the beam may be bundled with some time-frequency code resources for transmission. A beam may also be a transmission (sending/receiving) mode; the transmission mode may include space division multiplexing, frequency domain/time domain diversity, beamforming, etc. In some embodiments, a beam pair includes a combination of a transmitting beam and a receiving beam.

In some embodiments, a beam is equivalent to a beam state, a quasi-co-location (QCL) state, a transmission configuration indicator (TCI) state, a spatial relation, spatial relation information, a reference signal (RS), a reference signal resource, a spatial filter, and precoding. In some embodiments, the transmitting beam is equivalent to a QCL state, a TCI state, spatial relation, a spatial relation state, an uplink/downlink reference signal (e.g., CSI-RS, SSB, DMRS (Demodulation Reference Signal), SRS, PRACH (Physical Random Access Channel)), a transmit spatial filter, and transmit precoding. In some embodiments, the receiving beam is equivalent to a QCL state, a TCI state, spatial relation, a spatial relation state, a spatial receiving parameter, a spatial filter, a received spatial filter, and received precoding. The spatial filter, also known as a spatial domain filter, may be applied to either the base station side or the UE side. In some embodiments, the base station may perform quasi co-location (QCL) configuration for two reference signals, and inform a user end to describe a channel characteristic hypothesis. Parameters involved in the quasi co-location include at least: Doppler spread, Doppler shift, delay spread, average delay, average gain and a spatial parameter (Spatial Rx parameter, or Spatial parameter); where the spatial parameter may include a spatial receiving parameter, angle information, spatial correlation of the receiving beam, average delay, and correlation of a time-frequency channel response (including phase information). Angle information may include at least one of the following: angle of arrival (AOA), angle of departure (AOD), zenith angle of departure (ZOD), and zenith angle of arrival (ZOA). The spatial domain filtering may be at least one of the following: a discrete Fourier transform (DFT) vector, a precoding vector, a DFT matrix, a precoding matrix, or a vector formed by a linear combination of multiple DFTs, or a vector formed by a linear combination of multiple precoding vectors. In some embodiments, the concepts of phasor and vector are interchangeable.

In some examples, in order to better transmit data or signals, the base station or the terminal needs to acquire measurement parameters. The measurement parameters may include channel state information or other parameters used to characterize the channel, where the channel state information may include at least one of the following: channel state information-reference signal resource indicator (CSI-RS resource indicator, CRI), synchronization signal block resource indicator (SSBRI), layer 1 reference signal received power (L1 reference signal received power, L1-RSRP or RSRP), differential RSRP (Differential RSRP), layer 1 reference signal signal to interference plus noise ratio (L1 signal-to-interference-noise ratio, L1-SINR or SINR), differential L1-SINR (Differential L1-SINR), reference signal received quality (RSRQ), channel quality indicator (CQI), precoding matrix indicator (PMI), layer indicator (LI), rank indicator (RI), and precoding information. The precoding information includes a first type of precoding information, such as precoding information based on the codebook. Herein, a precoding matrix indication is one of pieces of codebook-based precoding information. The precoding information further includes non-codebook implementations, such as a second type of precoding information, for example, precoding information obtained based on advanced technologies such as artificial intelligence.

In some embodiments, the beam parameter information includes at least one of the following: a layer 1 reference signal received power corresponding to at least one beam, a layer 1 reference signal interference ratio corresponding to at least one beam, and a confidence level/probability corresponding to at least one beam (i.e., the probability that the beam has the maximum measured RSRP or the maximum measured SINR). In some embodiments, the beam parameter information is a reference signal received quality corresponding to at least one beam. In some embodiments, the beam parameter information is a beam angle (e.g., at least one of AOA, ZOA, AOD, ZOD, etc., also referred to as an azimuth angle of arrival, a vertical angle of arrival, an azimuth angle of departure, vertical angle of departure, respectively) corresponding to at least one beam. In some embodiments, the beam parameter information is a transmitting beam index corresponding to at least one beam. In some embodiments, the beam parameter information is a receiving beam index corresponding to at least one beam. In some embodiments, the beam parameter information is an index of a transmitting beam and receiving beam pair (referred to as a beam pair index or beam pair for short) corresponding to at least one beam. In some embodiments, the beam parameter information is a beam domain receive power map (BDRPM) corresponding to at least one beam. In some embodiments, the beam parameter information is a channel state information reference signal resource indicator corresponding to at least one beam. In some embodiments, the beam parameter information is a synchronization signal block resource indicator (synchronization signals block resource indicator, SSBRI) or other reference signal resource indicators corresponding to at least one beam, such as sounding reference signal resource indicator (SRSRI). In some embodiments, the beam parameter information is a combination of at least two of the following beam parameter information corresponding to at least one beam: RSRP, RSRQ, SINR, a beam angle, a transmitting beam index, a receiving beam index, a beam pair index, CRI, SSBRI, etc. In some embodiments, the beam parameter information is a linear value of one of RSRP, RSRQ, and SINR. In some embodiments, the beam parameter information is a logarithmic value or a decibel value (dB) of one of RSRP, RSRQ, and SINR.

In some embodiments, the beam parameter information may also be referred to as beam quality information, or a channel measurement result, or a beam measurement result, or a measurement result, or a measurement parameter. In some embodiments, the beam parameter information is a subset of the channel state information, that is, the beam parameter information is the channel state information, and the channel state information belongs to the measurement parameter. In some embodiments, the measurement parameter, the channel state information, and the beam parameter information each are belong to the measurement result, a processing result, or a generation result.

In some embodiments, in order to transmit channel state information at the physical layer, the terminal and the base station define a CSI report (CSI report or CSI report config), where the CSI report defines at least one of the following parameters: time-frequency resources used for feeding back CSI, report quality included in CSI, time-domain type of CSI feedback (report Config Type), channel measurement resources, interference measurement resources, and measurement bandwidth. The CSI report may be transmitted on an uplink transmission resource, where the uplink transmission resource includes a physical uplink shared channel (PUSCH) and a PUCCH, and the CSI report also includes time domain characteristics, including periodic CSI report (P-CSI), aperiodic CSI report (AP-CSI), and semi-persistent CSI report (SP-CSI).

In some embodiments, the base station configures, for the terminal, NC CSI reports that need to be fed back to the base station through a higher-layer signaling and/or a physical-layer signaling. Each CSI report has an identifier (identity/identifier, ID), referred to as CSI report ID. The terminal may select MC CSI reports from the NC CSI reports according to its own computing or processing capabilities and the requirements of the base station, and feed back at least one of the MC CSI reports according to the uplink feedback resources, where NC and MC are positive integers, and MC is less than or equal to NC (i.e., MC <= NC). In an example, MC CSI reports need to be fed back, but the feedback resources for at least two of the MC reports are conflicting. The feedback resource conflict between the two reports refer to a situation that at least one symbol and/or at least one subcarrier are the same in the corresponding transmission resources (e.g., PUCCH or PUSCH) used to feedback the two reports. In some embodiments, a feedback CSI may also be referred to as a transmitting CSI or a sending CSI, for example, the channel state information is carried on an uplink transmission resource for feedback or transmission. The uplink transmission resource and a corresponding CSI are both indicated by a channel state information report. In some embodiments, feeding back or transmitting a CSI report refers to feeding back channel state information configured in the CSI report. In some embodiments, feeding back or transmitting a CSI report refers to transmitting contents that needs to be transmitted and configured by the transmission resource transmission CSI report.

In some embodiments, artificial intelligence (AI) includes a device, a component, software, and a module with self-learning capabilities such as machine learning (ML), deep learning, reinforcement learning, transfer learning, deep reinforcement learning, meta-learning. In some embodiments, artificial intelligence is implemented through an artificial intelligence network (or neural network), the neural network includes multiple layers, and each layer includes at least one node. In an example, the neural network includes an input layer, an output layer, and at least one hidden layer. Each layer of the neural network uses a layer including, but is not limited to at least one of a fully-connected layer, a dense layer, a convolutional layer, a transposed convolutional layer, a direct connection layer, an activation function, a normalization layer, a pooling layer, etc. In some embodiments, each layer of the neural network may include a sub-neural network, such as a residual network block (or also referred to as Resnet block), a dense network (Densenet Block), a recurrent neural network (RNN), etc. Artificial intelligence networks may be implemented through models, where the model may include neural network model. The neural network model includes a neural network model structure and/or a neural network model parameter. The neural network model structure may be referred to as a model structure for short, and the neural network model parameter may be referred to as a network parameter or a model parameter for short. A model structure defines an architecture of the network, such as a number of layers of the neural network, a size of each layer, an activation function, a link situation, a size of a convolution kernel and a convolution step, a convolution type (e.g., 1D (dimension) convolution, 2D convolution, 3D convolution, hollow convolution, transposed convolution, separable convolution, group convolution, extended convolution, etc.), and the network parameter is a weight value and/or biases and their values of each network layer in the network model. A model structure may correspond to multiple sets of values of different neural network model parameters to adapt to different scenarios. The neural network model parameter is obtained through online training or offline training. For example, by inputting at least one sample and label, the neural network model is trained to obtain the neural network model parameters.

In some embodiments, "model" refers to a general term used to describe a processing method, a function, a feature, or a group of features that a terminal can perform. In some embodiments, a model is equivalent to a function (functionality), a functional module, a functional entity, a processing method, an information processing mode, an implementation, a feature, a feature group, a configuration, a configuration combination, or a configuration set. In some embodiments, each model corresponds to a model indicator (model ID) or a functionality indicator, or a model identity (model ID), or a functionality identity. In some embodiments, the model identifier may also have one of the following other equivalent names or concepts: a model index, a first identifier, a function identifier, a model indicator, etc.

In some embodiments, a model refers to a data flow between an original input of a sample and an output target passing through multiple linear or nonlinear components. The model includes a neural network model, a non-artificial intelligence module for processing information or corresponding model thereof, and a functional component or function for mapping input information to output information (the mapping herein includes linear mapping and nonlinear mapping).

In some examples, the model includes a model structure and model parameters. For example, the model is a neural network model, and the neural network model includes a neural network model structure and neural network model parameters, which are respectively used to describe a structure of the neural network and parameter values of the neural network. A neural network model structure may correspond to multiple neural network model parameters, that is, neural network model structures may be the same, but corresponding neural network model parameter values may be different.

The method provided in the present disclosure will be illustrated below in detail in combination with the accompanying drawings of the description.

As shown in FIG. 2, the embodiments of the present disclosure provide a communication method applied to a first node. The method at least includes S101 to S103.

In S101, auxiliary information is sent, where the auxiliary information is used to assist a second node in identifying a first information processing mode.

In some embodiments, the auxiliary information includes at least one of: an identifier of the first information processing mode, a configuration identifier, dataset information, a dataset identifier, environmental information, an environmental identifier, scenario information, a scenario identifier, site information, a site identifier, a cell identifier, an identifier of a network implementation mode adopted by the first node, codebook information, and a codebook identifier.

In some embodiments, the identifier of the first information processing mode may include at least one of: an index of the first information processing mode, a scenario identifier corresponding to the first information processing mode, a site identifier corresponding to the first information processing mode, a dataset identifier corresponding to the first information processing mode, and a configuration identifier corresponding to the first information processing mode.

In some embodiments, the auxiliary information is contained in a broadcast message or a dedicated signaling.

In an example, the auxiliary information is contained in the broadcast message, that is, the first node broadcasts the auxiliary information to all second nodes in the cell (cell specific). The first node may implicitly broadcast environmental information of a current first node or the network implementation mode adopted by the first node to all second nodes in the cell through the auxiliary information such as the scenario identifier, the site identifier, the dataset identifier, etc., so that the second node may determine one or more information processing modes that may be suitable for the current cell based on the received auxiliary information in the trained information processing mode or model.

In another example, the auxiliary information is contained in the dedicated signaling, that is, the first node instructs the auxiliary information to a specific terminal (UE specific). The first node may, based on the relevant information of the information processing mode sent from the second node, directly determine one or more information processing modes or models that may be applicable to the second node, and indicate the identifiers of the determined one or more information processing modes to the second node. The first node may be a base station, and the second node may be a terminal.

In some embodiments, the identifier of the information processing mode includes at least one of: an index of the information processing mode, a scenario identifier corresponding to the information processing mode, a site identifier corresponding to the information processing mode, a dataset identifier corresponding to the information processing mode, and a configuration identifier corresponding to the information processing mode.

In some embodiments, the first node may also receive relevant information of a third information processing mode sent from the second node. The first information processing mode belongs to the third information processing mode.

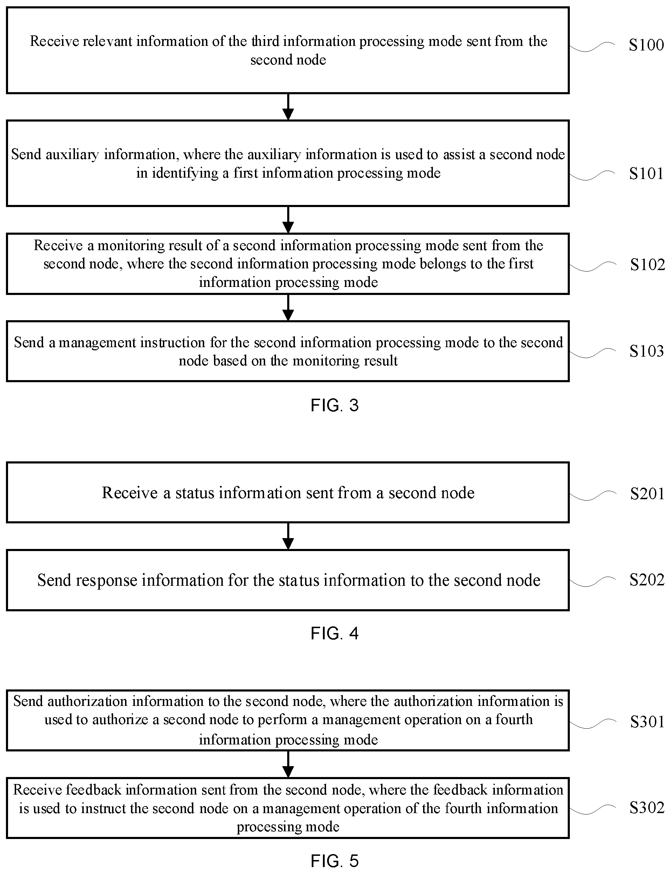

For example, as shown in FIG. 3, before sending the auxiliary information to the second node, the first node may perform step S100: receiving relevant information of the third information processing mode sent from the second node.

The relevant information of the third information processing mode includes at least one of the following: reference signal resource configuration, quantization configuration, channel state information reporting configuration, delay information of a management operation related to the third information processing mode, a configuration identifier corresponding to the third information processing mode, a scenario identifier corresponding to the third information processing mode, a site identifier corresponding to the third information processing mode, a dataset identifier corresponding to the third information processing mode, data distribution information (distribution information of input data/output data) corresponding to the third information processing mode, and performance information corresponding to the third information processing mode.

In some embodiments, the relevant information of the third information processing mode may include static relevant information of the third information processing mode, such as reference signal resource configuration, quantization configuration, channel state information reporting configuration, etc. The static relevant information may be reported to the base station based on a capability of the terminal. The relevant information of the third information processing mode may also include dynamic relevant information, such as a scenario identifier/information corresponding to the third information processing mode, a site identifier/information corresponding to the third information processing mode, and a dataset identifier/information corresponding to the third information processing mode.

It should be noted that input information, output information, required reference signal resource configuration, channel state information reporting configuration, and applicable scenarios corresponding to different information processing modes may all be different. Therefore, before activating the information processing mode on a second node side, the second node may send the relevant information of the third information processing mode to the first node. Accordingly, the first node receives the relevant information of the third information processing mode, i.e., step S100 above. As a result, the first node and the second node may achieve consistentency in the relevant information of the third information processing mode, which may also be referred to as consistent understanding.

Therefore, in a scenario, the first node may, based on the relevant information of the aforementioned third information processing mode, determine an appropriate information processing mode. In another scenario, after receiving relevant information of the third information processing mode, the base station still cannot determine the appropriate information processing mode. For example, the relevant information of the third information processing mode sent from the second node cannot be completely matched with the current configuration information, adopted network implementation, and scenario information of the first node, which makes it impossible for the first node to accurately indicate/activate/select an information processing mode. Thus, the first node may initiate a monitoring of one or more first information processing modes on the second node side, that is, send auxiliary information to the second node, so that the second node may monitor the first information processing mode indicated by the auxiliary information, that is, perform information processing modes or model pre-operation processes (e.g., model pre-activation, model pre-selection, model pre-switching, model pre-deactivation, model pre-update, etc.) based on the indication information of the first node. Correspondingly, the first node may also perform management operations such as activation, switching, or selection of the information processing mode that has passed monitoring.

In S102, a monitoring result of a second information processing mode sent from a second node is received, where the second information processing mode belongs to the first information processing mode.

In some embodiments, the monitoring result includes at least one of: an identifier of the second information processing mode, a performance parameter of the second information processing mode, configuration information, scenario information corresponding to the second information processing mode, site information corresponding to the second information processing mode, and dataset information corresponding to the second information processing mode.

For example, the performance parameter of the second information processing mode may include parameters such as parameter (e.g., beam) prediction accuracy, prediction error for parameters (e.g., CSI, RSRP, SINR, etc.), system-level or link-level performance parameters, and input/output data distribution of the second information processing mode. The configuration information may be a recommended configuration or configuration identifier for the first node, such as reference signal resource configuration, quantization configuration, CSI reporting configuration, etc. The scenario information corresponding to the second information processing mode, the site information corresponding to the second information processing mode, and the dataset information corresponding to the second information processing mode may be a corresponding scenario identifier/information, a site identifier/information, and a dataset identifier/information, etc.

It should be noted that when the second node receives the auxiliary information sent from the first node, the second node may identify the first information processing mode based on the auxiliary information, monitor the first information processing mode, to obtain the monitoring result of the first information processing mode. Furthermore, the second node determines the second information processing mode that has passed monitoring in the first information processing modes, and sends the monitoring result of the second information processing mode to the first node.

In some embodiments, the monitoring result may be a result obtained from feasibility monitoring of information processing modes or models.

In some embodiments, the identifier of the second information processing mode may include at least one of: an index of the second information processing mode, a scenario identifier corresponding to the second information processing mode, a site identifier corresponding to the second information processing mode, a dataset identifier corresponding to the second information processing mode, and a configuration identifier corresponding to the second information processing mode.

In a possible implementation, after preset time expires, the first node may receive the monitoring result of the second information processing mode sent from the second node.

In some embodiments, before receiving the monitoring result of the second information processing mode sent from the second node, the first node may send indication information of the preset time to the second node.

For example, when the second node receives the auxiliary information and the preset time sent from the first node, the second node may identify the first information processing mode based on the auxiliary information, monitor the first information processing mode, and determine the second information processing mode that has passed monitoring in the first information processing mode. Upon the preset time expires, the second node may send the monitoring result of the second information processing mode to the first node, and correspondingly, the first node receives the monitoring result of the second information processing mode.

In another possible implementation, the monitoring result of the second information processing mode sent from the second node satisfies a preset condition.

That is, the second node may proactively trigger a report, and send the monitoring result of the second information processing mode that satisfies the preset condition to the first node.

In some embodiments, before receiving the monitoring result of the second information processing mode sent from the second node, the first node may send indication information of the preset condition to the second node.

The preset condition is based on one or more settings of the second information processing mode: link-level performance, system-level performance, information processing accuracy, an information processing error value, a data distribution parameter, a performance index, a timer, and a counter.

For example, the first node may send a threshold related to performance indicators of the information processing mode, such as the information processing accuracy, the information processing error value, the system-level performance, the link-level performance, and the data distribution parameter, to the second node. The data distribution parameter may be distribution parameters of the input data and the output data of the information processing mode. Furthermore, the second node may perform multiple monitoring processes or perform model inference, compare the obtained result with the threshold, and determine the second information processing mode that satisfies the preset condition corresponding to the threshold. If, for example, the information processing accuracy is greater than the threshold corresponding to the information processing accuracy, the information processing error value is less than the threshold corresponding to the information processing error value, a number of consecutive successful monitoring times is greater than a preset time threshold, a performance indicator (e.g., system-level performance or information processing accuracy) is higher than a preset performance threshold or a number of monitoring times of the performance indicator higher than the preset performance threshold is greater than a corresponding time threshold, or a performance indicator (e.g., information processing error value) is lower than a preset performance threshold or the number of monitoring times of the performance indicator lower than the preset performance threshold is greater than a corresponding time threshold, then the second node may proactively trigger reporting and send the monitoring result of the second information processing mode that satisfies the preset condition to the first node.

In S103, a management instruction for the second information processing mode is sent to the second node based on the monitoring result.

In some embodiments, the management instruction is used to instruct any of the following operations on the second information processing mode: activation, deactivation, selection, update, or switching.

For example, based on the monitoring result sent from the second node, the first node may instruct the second node to activate, deactivate, select, update or switch to the second information processing mode, and configure the corresponding reference signal resources, quantization, CSI reporting, etc.

In some embodiments, the first node may send second indication information to the second node, where the second indication information is used to indicate a reference signal resource, a beam, or a signal that cannot be used for transmission.

For example, the first node may carry an additional bitmap upon configuring a reference signal resource set. For example, if a corresponding position in the bitmap is 1, it means that a corresponding beam may be transmitted, and 0 means that the corresponding beam cannot be transmitted. Furthermore, a length of the bitmap is determined corresponding to a parameter such as input data, a feature parameter, a number of beams, output data, a feature parameter, and a number of beams of the information processing mode on the second node side.

Correspondingly, for a beam that cannot be transmitted, the second node may obtain a corresponding beam measurement result through other methods such as interpolation algorithms.

In some embodiments, the first node may also send a third indication information to the second node.

The third indication information is used to indicate whether the beam/signal/transmission characteristics of the reference signal resource in the inference phase are consistent with those in the training phase.

For example, upon configuring a reference signal resource or a set of reference signal resources, the first node may additionally indicate beam/signal/transmission description information, such as 1 bit, for each reference signal resource or the set of reference signal resources. In a case where the beam description information is 1, it means that the beam characteristics corresponding to the reference signal resource (or reference signal resource set) are consistent with the beam characteristics during the training phase. Or, in a case where the beam description information is 0, it means that the beam characteristics corresponding to the reference signal resource (or reference signal resource set) are inconsistent with the beam characteristics in the training phase.

In some embodiments, the first node may also send fourth indication information to the second node.

The fourth indication information is used to indicate a degree of deviation or similarity between the beam/signal/transmission characteristics of the reference signal resource in the inference phase and the beam/signal/transmission characteristics in the training phase.

For example, upon configuring a reference signal resource or a reference signal resource set, the first node may additionally indicate beam deviation information for each reference signal resource or reference signal resource set. The deviation information is used to describe a degree of deviation between a beam in the training phase and a corresponding beam in the inference phase, such as a beam angle difference, a beamwidth difference, etc. Alternatively, upon configuring a reference signal resource or a reference signal resource set, the first node may additionally indicate beam similarity information for each reference signal resource or reference signal resource set. The similarity information is used to describe a degree of similarity between beam in the training phase and a corresponding beam in the inference phase, or other information representing related information.

In some embodiments, the first node may also send grouping information to the second node, where the grouping information is used to indicate an information processing mode belonging to a same group.

For example, the grouping information may include an identifier of the information processing mode belonging to the same group.

The aforementioned management instruction is used to instruct the second information processing mode and each information processing mode belonging to the same group as the second information processing mode to perform any of the following operations: activation, deactivation, selection, update, and switching. That is, different information processing modes in the same group may be managed simultaneously.

It should be understood that beam characteristics may simultaneously affect the performance of multiple information processing modes on the second node side. Therefore, in a case where the beam characteristics of the reference signal resources in the inference phase are inconsistent with those in the training phase, the first node may manage multiple information processing modes simultaneously without sending a management instruction for each individual information processing mode, thus saving signaling overhead.

It should be noted that, in a case of beam management based on artificial intelligence, the measurement result of the second node side and the input or output information of the information processing mode, may be obtained based on the beam characteristics of the first node. Therefore, it is generally necessary to ensure beam consistency (including consistency in beamwidth, beam angle, etc.) between the training phase and the inference phase. Furthermore, beam characteristics may simultaneously affect the performance of multiple second node side information processing modes. Therefore, when the beam characteristics of the reference signal resources in the inference phase are inconsistent with those in the training phase, the first node may manage multiple information processing modes simultaneously without sending a management instruction for each individual information processing mode, thus saving signaling overhead and improving a flexibility of information processing mode management on the second node side.

Based on the technical solution provided in the present disclosure, the first node may instruct the second node to start the feasibility monitoring of the information processing mode before performing a management operation of the information processing mode. Then, based on the monitoring result sent from the second node, the first node may perform a management operation on the information processing mode that has passed the test. In this way, an accuracy of information processing mode management may be improved, and a processing latency of the first node may be reduced.

In some embodiments, as shown in FIG. 4, the method provided in the present disclosure may further at least include S201 to S202.

In S201, status information sent from the second node is received.

In some embodiments, the status information includes at least one of: an identifier of an old information processing mode, first indication information, an identifier of a new information processing mode, and time information.

The first indication information is used to indicate whether the status information contains the identifier of the new information processing mode. Time information is used to characterize a time required for the second node to activate the old information processing mode. Alternatively, the time information is used to characterize time required for the second node to activate or switch to the new information processing mode. The time information may be a frame, a subframe, a time slot, a sub-time slot, or a symbol, etc.

For example, the aforementioned old information processing mode refers to a information processing mode that needs to be deactivated or switched. The identifier of the old information processing mode may include at least one of: an index of the old information processing mode, a scenario identifier corresponding to the old information processing mode, a site identifier corresponding to the old information processing mode, a dataset identifier corresponding to the old information processing mode, and a configuration identifier corresponding to the old information processing mode.

In addition, the aforementioned new information processing mode is a new information processing mode that may be switched to or activated. The identifier of the new information processing mode may also include at least one of: an index of the new information processing mode, a scenario identifier corresponding to the new information processing mode, a site identifier corresponding to the new information processing mode, a dataset identifier corresponding to the new information processing mode, and a configuration identifier corresponding to the new information processing mode.

It should be noted that the configurations of reference signal resources and channel state information reporting may differ for different information processing modes on the second node side. The manner of resource configuration or reporting configuration may be indicated or controlled by the first node. That is, the first node may determine the activation, deactivation, switching or selection of information processing modes on the second node side. However, in some possible situations, the second node may predict or determine a working status of the information processing mode on the second node side more accurately. For example, a performance of the information processing mode is related to factors such as an operating load, and a computing resource on the second node, as well as a running trajectory, a movement speed, and surrounding environment of the second node side. In a case where the second node may perceive the movement trajectory, the movement speed, the surrounding environment, or own software or hardware environment of the second node itself, and thus predict the working status of the information processing mode, the second node may proactively report the determined information (i.e., the aforementioned status information) to the first node to assist the first node in sending the management instruction for the second information processing mode to the second node, thereby activating, deactivating, selecting, updating, and switching the second information processing mode.

In an example, the second node may proactively trigger reporting and send status information to the first node.

In another example, the first node may send relevant configuration information of reporting status information to the second node, and the second node sends status information to the first node based on the reporting timing indicated by the configuration information.

In S202, response information for the status information is sent to the second node.

For example, the first node may determine and respond to the status information sent from the second node, that is, send response information for the status information to the second node. For example, the second node may monitor the control-resource set (CORESET) or search space that carries the control information of response from the base station within a time window. When the second node receives the response information sent from the first node, the second node may proactively perform operations (such as switching or deactivating) on the information processing mode at the appropriate time. Conversely, if the second node does not receive the response information from the first node, the second node will not proactively switch or deactivate information processing mode.

Based on the above embodiments, a pre-operation mechanism for a reporting information processing mode of the second node is proposed. The first node may receive the environmental perception data of the second node itself and the status information of the determined information processing mode, sent from the second node, to assist the first node in managing the working status of the information processing mode. In this way, the information processing latency of the first node may be reduced and the accuracy of the information processing mode may be improved.

In some embodiments, as shown in FIG. 5, the communication method provided in the present disclosure may further at least include S301 to S302.

In S301, authorization information is sent to the second node, where the authorization information is used to authorize the second node to perform a management operation on a fourth information processing mode.

In some embodiments, the above management operation include performing any of the following operations on the fourth information processing mode: activation, deactivation, selection, update, and switching. That is, the first node allows the second node to autonomously perform a management operation (such as activation, deactivation, selection, update, and switching) on the fourth information processing mode.

In some embodiments, the fourth information processing mode may be the above information processing mode that has passed monitoring. The fourth information processing mode may belong to the first information processing mode.

In addition, the authorization information includes at least one of: an identifier of the fourth information processing mode and authorization time.

In some embodiments, the identifier of the fourth information processing mode includes at least one of: an index of the fourth information processing mode, a scenario identifier corresponding to the fourth information processing mode, a site identifier corresponding to the fourth information processing mode, a dataset identifier corresponding to the fourth information processing mode, and a configuration identifier corresponding to the fourth information processing mode.

In some embodiments, the authorization time refers to the time where the first node authorizes the second node to perform a management operation on the fourth information processing mode. That is, during the authorized time, the second node may autonomously perform a management operation (such as activation, deactivation, selection, update, and switching) on the fourth information processing mode without sending a request to the first node or obtaining permission from the first node. For example, a unit of the authorized time may be a frame, a subframe, a time slot, a sub-time slot, or a symbol, etc.

It should be noted that, under normal circumstances, in order to ensure a controllability of the information processing mode by the first node, the first node may perform a management operation (such as activation, deactivation, selection, update, and switching) on the information processing mode of the second node side. That is, in a case where it is necessary to perform a management operation on the information processing mode of the second node side, the second node may send a request of the management operation to the first node, and after receiving a response from the first node side, the second node may perform the management operation on the information processing mode. However, this approach incurs unnecessary signaling overhead and processing latency.

In step S302, feedback information sent from the second node is received, where the feedback information is used to instruct the second node on a management operation of the fourth information processing mode.

In some embodiments, the feedback information includes at least one of: a number of management operations and an identifier of the fourth information processing mode corresponding to the management operation. For example, after the second node performs a management operation (such as activation, deactivation, selection, update, and switching) on the fourth information processing mode within the aforementioned authorized time, the second node may send feedback information to the first node, such as the number of times the management operation (such as activation, deactivation, selection, update, and switching) is performed on the fourth information processing mode, an identifier of the fourth information processing mode before the management operation, and an identifier of the fourth information processing mode after the management operation.

In some embodiments, the second node may also not send the feedback information to the first node.

Based on the above embodiments, when the first node authorizes the second node, the second node may autonomously manage the information processing mode without requesting from or receiving a response from the first node. In this way, signaling overhead and processing latency may be reduced. Furthermore, in some cases, the second node may monitor the status information (e.g., the operating environment) of its own information processing mode more accurately, and the method may also improve the accuracy of information processing management.

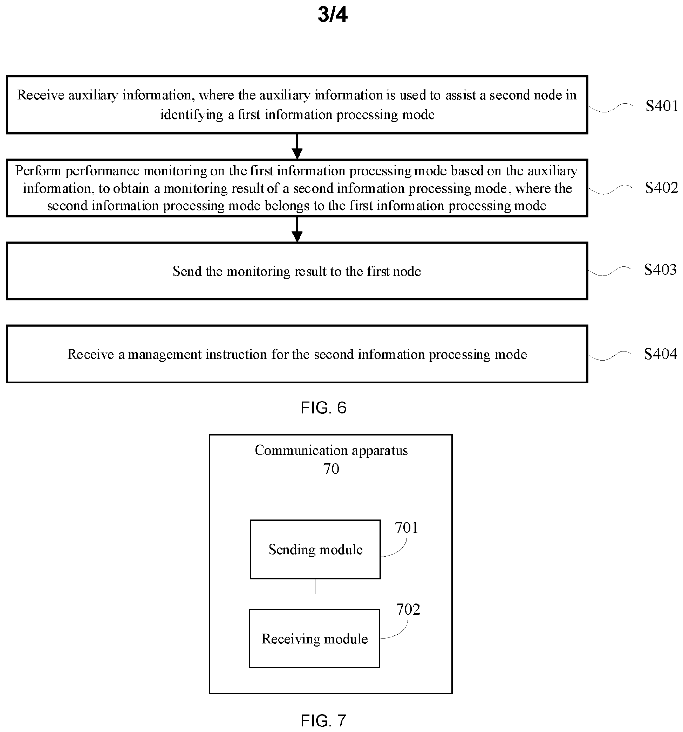

In some embodiments, as shown in FIG. 6, the present disclosure further provides another communication method, applied to a second node, and the method at least includes S401 to S404.

In S401, auxiliary information is received, where the auxiliary information is used to assist the second node in identifying a first information processing mode.

In some embodiments, the auxiliary information includes at least one of: an identifier of the first information processing mode, a configuration identifier, dataset information, a dataset identifier, environmental information, an environmental identifier, scenario information, a scenario identifier, site information, a site identifier, a cell identifier, an identifier of the network implementation mode adopted by the first node, codebook information, and a codebook identifier.

In some embodiments, the auxiliary information is contained in a broadcast message or a dedicated signaling.

In S402, performance monitoring is performed on the first information processing mode based on the auxiliary information, to obtain a monitoring result of a second information processing mode, where the second information processing mode belongs to the first information processing mode.

In S403, the monitoring result is sent to the first node.

In some embodiments, after feedback time configured by the first node, the second node may send the monitoring result to the first node.

In some embodiments, the monitoring result includes at least one of: an identifier of the second information processing mode, a performance parameter of the second information processing mode, configuration information, scenario information corresponding to the second information processing mode, site information corresponding to the second information processing mode, and dataset information corresponding to the second information processing mode.

In some embodiments, if the monitoring result satisfies a preset condition, the monitoring result is sent to the first node.

For example, the second node may receive indication information of the preset condition sent from the first node. The preset condition is based on one or more settings of the second information processing mode: link-level performance, system-level performance, information processing accuracy, an information processing error value, a data distribution parameter, a performance index, a timer, and a counter.

In some embodiments, the second node may also send relevant information of the third information processing mode to the first node. The first information processing mode belongs to the third information processing mode.

The relevant information of the third information processing mode includes at least one of: reference signal resource configuration, quantization configuration, channel state information reporting configuration, delay information of a management operation related to the third information processing mode, configuration identifier corresponding to the third information processing mode, scenario identifier/information corresponding to the third information processing mode, site identifier/information corresponding to the third information processing mode, dataset identifier/information corresponding to the third information processing mode, data distribution information corresponding to the third information processing mode, and performance information corresponding to the third information processing mode.

In S404, a management instruction for the second information processing mode is received.

In some embodiments, the management instruction is used to instruct the second information processing mode to perform any of the following operations: activation, deactivation, selection, update, or switching.

In a possible implementation, the second node may send status information to the first node, and the status information includes at least one of: an identifier of the old information processing mode, first indication information, an identifier of the new information processing mode, and time information. Where the first indication information is used to indicate whether the status information includes the identifier of the new information processing mode; the time information is used to characterize time required for the second node to deactivate the old information processing mode, or the time information is used to characterize time required for the second node to activate or switch to the new information processing mode.

Furthermore, the second node may also receive response information for the status information sent from the first node. In addition, based on the response information, the old information processing mode is deactivated, and/or the new information processing mode is activated.

In some embodiments, authorization information sent from the first node may also be received, and the authorization information is used to authorize the second node to perform a management operation on the fourth information processing mode. The management operation includes performing any of the following operations on the fourth information processing mode: activation, deactivation, selection, update, and switching. The authorization information includes at least one of: an identifier of the fourth information processing mode and authorization time.

In some embodiments, the identifier of the above information processing mode includes at least one of: an index of an information processing mode, a scenario identifier corresponding to the information processing mode, a site identifier corresponding to the information processing mode, a dataset identifier corresponding to the information processing mode, and a configuration identifier corresponding to the information processing mode.

In some embodiments, the second node may perform the management operation on the fourth information processing mode within the authorized time.

In some embodiments, the second node may also send feedback information to the first node, and the feedback information is used to instruct the second node to perform a management operation on the fourth information processing mode. The feedback information includes at least one of: a number of times the management operation is performed and an identifier of the fourth information processing mode corresponding to the management operation.

In some embodiments, the second node may also receive second indication information sent from the first node, where the second indication information is used to indicate a reference signal resource, a beam, or a signal that cannot be used for transmission.

In some embodiments, the second node may also receive third indication information sent from the first node, where the third indication information is used to indicate whether the beam/signal/transmission characteristics of the reference signal resource in the inference phase are consistent with those in the training phase.

In some embodiments, the second node may also receive a fourth indication information sent from the first node, where the fourth indication information is used to indicate the degree of deviation or similarity between the beam/signal/transmission characteristics of the reference signal resource during the inference phase and the beam/signal/transmission characteristics during the training phase.

In some embodiments, the second node may also receive grouping information sent from the first node, where the grouping information is used to indicate a information processing mode belonging to a same group.

Furthermore, the second node may then receive a management instruction sent from the first node for any processing mode in the same group, and in response to the management instructions, perform a management operation on each processing mode in the same group.

For a detailed description of steps S401 to S404, reference may also be made to the relevant descriptions in the embodiments shown in FIGS. 2 to 5 above, which will not be repeated herein.

The foregoing mainly introduces the solutions provided by the present disclosure from the perspective of interaction between various communication nodes. It can be understood that, in order to achieve the above-mentioned functions, each communication node includes corresponding hardware structures and/or software modules for executing respective functions. Those skilled in the art should easily realize that the present disclosure can be implemented in the form of hardware or a combination of hardware and computer software in combination with algorithms and steps described in the embodiments disclosed in the present disclosure. Whether a certain function is performed by hardware or computer software-driven hardware depends on the specific application and design constraints of the technical solutions. Professional technicians may use different methods to implement the described functions for each specific application, but such implementation should not be considered beyond the scope of the present disclosure.

FIG. 7 is a schematic diagram of a composition of a communication apparatus provided in the embodiments of the present disclosure. The communication apparatus 70 may be the above-mentioned first node or a chip in the first node. When the communication apparatus 70 is configured to implement functions of the first node in the above-mentioned embodiments, various modules may be configured to implement the following functions. As shown in FIG. 7, the communication apparatus 70 may include a sending module 701 and a receiving module 702.

In some embodiments, the sending module 701 is configured to send auxiliary information, where the auxiliary information is used to assist a second node in identifying a first information processing mode. The receiving module 702 is configured to receive a monitoring result of a second information processing mode sent from the second node, where the second information processing mode belongs to the first information processing mode. The sending module 701 is further configured to send a management instruction for the second information processing mode to the second node based on the monitoring result.

In some embodiments, the auxiliary information includes at least one of: an identifier of the first information processing mode, a configuration identifier, dataset information, a dataset identifier, environmental information, an environmental identifier, scenario information, a scenario identifier, site information, a site identifier, a cell identifier, an identifier of a network implementation mode adopted by the first node, codebook information, and a codebook identifier.

In some embodiments, the auxiliary information is contained in a broadcast message or a dedicated signaling.

In some embodiments, the monitoring result includes at least one of: an identifier of the second information processing mode, a performance parameter of the second information processing mode, configuration information, scenario information corresponding to the second information processing mode, site information corresponding to the second information processing mode, or dataset information corresponding to the second information processing mode.

In some embodiments, the management instruction is used to instruct any of the following operations on the second information processing mode: activation, deactivation, selection, update, or switching.

In some embodiments, the sending module 701 is further configured to send indication information of a preset condition to the second node.

In some embodiments, the preset condition is based on one or more settings of: link-level performance, system-level performance, information processing accuracy, an information processing error value, a data distribution parameter, a performance index, a timer, or a counter of the second information processing mode.

In some embodiments, the monitoring result of the second information processing mode sent from the second node satisfies the preset condition.

In some embodiments, the receiving module 702 is further configured to receive relevant information of the third information processing mode sent from the second node, where the first information processing mode belongs to a third information processing mode, and the relevant information of the third information processing mode includes at least one of: reference signal resource configuration, quantization configuration, channel state information reporting configuration, delay information of a management operation related to the third information processing mode, a configuration identifier corresponding to the third information processing mode, a scenario identifier corresponding to the third information processing mode, a site identifier corresponding to the third information processing mode, a dataset identifier corresponding to the third information processing mode, data distribution information corresponding to the third information processing mode, or performance information corresponding to the third information processing mode.

In some embodiments, the receiving module 702 is further configured to receive status information sent from the second node, where the status information includes at least one of: an identifier of an old information processing mode, first indication information, an identifier of a new information processing mode, or time information; where the first indication information is used to indicate whether the status information contains the identifier of the new information processing mode; the time information is used to characterize time required for the second node to deactivate the old information processing mode, or the time information is used to characterize time required for the second node to activate or switch to the new information processing mode.

In some embodiments, the sending module 701 is further configured to send response information for the status information to the second node.

In some embodiments, the sending module 701 is further configured to send authorization information to the second node, where the authorization information is used to authorize the second node to perform a management operation on a fourth information processing mode.

In some embodiments, the management operation includes performing any of the following operations on the fourth information processing mode: activation, deactivation, selection, update, or switching.

In some embodiments, the authorization information includes at least one of: an identifier of the fourth information processing mode and authorization time.

In some embodiments, the identifier of the information processing mode includes at least one of: an index of the information processing mode, a scenario identifier corresponding to the information processing mode, a site identifier corresponding to the information processing mode, a dataset identifier corresponding to the information processing mode, or a configuration identifier corresponding to the information processing mode.

In some embodiments, the receiving module 702 is further configured to receive feedback information sent from the second node, where the feedback information is used to instruct the second node to perform the management operation on the fourth information processing mode.

In some embodiments, the feedback information includes at least one of: a number of times the management operation is performed or an identifier of the fourth information processing mode corresponding to the management operation.

In some embodiments, the sending module 701 is further configured to send grouping information to the second node, where the grouping information is used to indicate an information processing mode belonging to a same group.

In some embodiments, the management instruction is used to instruct any of the following operations on the second information processing mode and other information processing modes belonging to the same group as the second information processing mode: activation, deactivation, selection, update, or switching.

For a more detailed description of the above-mentioned sending module 701 and the receiving module 702, as well as a more detailed description and beneficial effects of respective technical features thereof, reference may be made to the corresponding method embodiments section above, which will not be repeated herein.

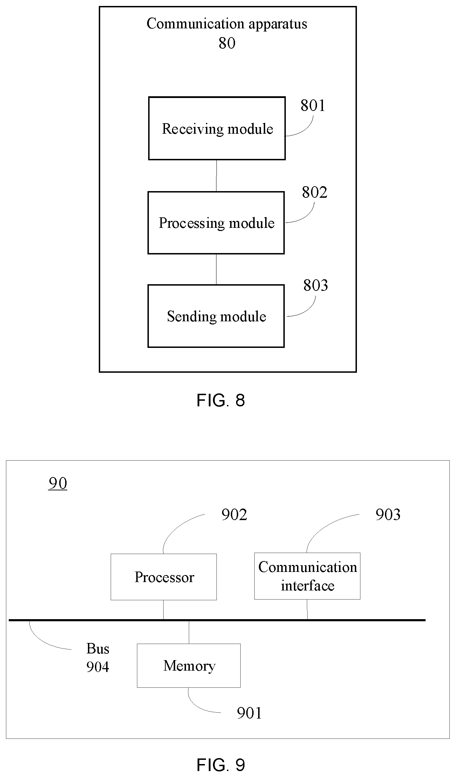

FIG. 8 is a schematic diagram of a composition of another communication apparatus provided in the embodiments of the present disclosure. The communication apparatus 80 may be the above-mentioned second node or a chip in the second node. When the communication apparatus 80 is configured to implement functions of the second node in the above-mentioned embodiments, various modules or units are configured to implement the following functions. As shown in FIG. 8, the communication apparatus 80 includes a receiving module 801, a processing module 802 and a sending module 803.

In some embodiments, the receiving module 801 is configured to receive auxiliary information, where the auxiliary information is used to assist a second node in identifying a first information processing mode. The processing module 802 is configured to perform performance monitoring on the first information processing mode based on the auxiliary information to obtain a monitoring result of a second information processing mode, where the second information processing mode belongs to the first information processing mode. The sending module 803 is configured to send the monitoring result to the first node. The receiving module 801 is further configured to receive a management instruction for the second information processing mode.

In some embodiments, the sending module 803 may be configured to send the monitoring result to the first node after feedback time configured for the first node.

In some embodiments, the auxiliary information includes at least one of: an identifier of the first information processing mode, a configuration identifier, dataset information, a dataset identifier, environmental information, an environmental identifier, scenario information, a scenario identifier, site information, a site identifier, a cell identifier, an identifier of the network implementation mode adopted by the first node, codebook information, or a codebook identifier.

In some embodiments, the auxiliary information is contained in a broadcast message or a dedicated signaling.

In some embodiments, the monitoring result includes at least one of: an identifier of the second information processing mode, a performance parameter of the second information processing mode, configuration information, scenario information corresponding to the second information processing mode, site information corresponding to the second information processing mode, or the dataset information corresponding to the second information processing mode.

In some embodiments, the management instruction is used to instruct any of the following operations on the second information processing mode: activation, deactivation, selection, update, or switching.

In some embodiments, the sending module 803 may be configured to send the monitoring result to the first node in response that the monitoring result satisfies a preset condition.

In some embodiments, the receiving module 801 is further configured to receive indication information of the preset condition sent from the first node.

In some embodiments, the preset condition is based on one or more settings of: link-level performance, system-level performance, information processing accuracy, an information processing error value, a data distribution parameter, a performance index, a timer, and a counter of the second information processing mode.

In some embodiments, the sending module 803 is further configured to send relevant information of the third information processing mode to the first node. The first information processing mode belongs to a third information processing mode. The relevant information of the third information processing mode includes at least one of: reference signal resource configuration, quantization configuration, channel state information reporting configuration, delay information of a management operation related to the third information processing mode, a configuration identifier corresponding to the third information processing mode, a scenario identifier corresponding to the third information processing mode, a site identifier corresponding to the third information processing mode, a dataset identifier corresponding to the third information processing mode, data distribution information corresponding to the third information processing mode, and performance information corresponding to the third information processing mode.

In some embodiments, the sending module 803 is further configured to send status information, where the status information includes at least one of: an identifier of the old information processing mode, first indication information, an identifier of a new information processing mode, or time information; where the first indication information is used to indicate whether the status information contains the identifier of the new information processing mode; the time information is used to characterize the time required for the second node to deactivate the old information processing mode, or the time information is used to characterize the time required for the second node to activate or switch to the new information processing mode.

In some embodiments, the receiving module 801 is further configured to receive response information for the status information sent from the first node. The processing module 802 is further configured to deactivate the old information processing mode and/or activate the new information processing mode based on the response information.

In some embodiments, the receiving module 801 is further configured to receive authorization information sent from the first node, where the authorization information is used to authorize the second node to perform a management operation on the fourth information processing mode.

In some embodiments, the management operation includes performing any of the following operations on the fourth information processing mode: activation, deactivation, selection, update, or switching.

In some embodiments, the authorization information includes at least one of: an identifier of the fourth information processing mode and authorization time.

In some embodiments, an identifier of an information processing mode includes at least one of: an index of the information processing mode, a scenario identifier corresponding to the information processing mode, a site identifier corresponding to the information processing mode, a dataset identifier corresponding to the information processing mode, or a configuration identifier corresponding to the information processing mode.

In some embodiments, the processing module 802 is further configured to perform a management operation on the fourth information processing mode within the authorized time.

In some embodiments, the sending module 803 is further configured to send feedback information to the first node, where the feedback information is used to instruct the second node to perform the management operation on the fourth information processing mode.

In some embodiments, the feedback information includes at least one of: a number of times the management operation is performed or the identifier of the fourth information processing mode corresponding to the management operation.

In some embodiments, the receiving module 801 is further configured to receive grouping information sent from the first node, where the grouping information is used to indicate the information processing mode belonging to the same group.

In some embodiments, the receiving module 801 is further configured to receive a management instruction sent from the first node on any processing mode in the same group. The processing module 802 is further configured to perform a management operation on each processing mode in the same group in response to the management instruction.

For a more detailed description of the receiving module 801, the processing module 802, and the sending module 803, as well as a more detailed description and beneficial effects of respective technical features thereof, reference may be made to the corresponding method embodiments section above, which will not be repeated herein.

It should be noted that the modules in FIG. 7 or FIG. 8 may also be referred to as units. For example, the sending module may also be referred to as a sending unit. In addition, in the embodiments shown in FIG. 7 or FIG. 8, the names of various modules may not be the same as those shown in the drawings. For example, the sending module may also be referred to as a communication module, and the receiving module may also be referred to as a communication module.

If the various units or modules in FIG. 7 and FIG. 8 are implemented in the form of a software functional module, and sold or used as an independent product, the various units or modules may be stored in a computer readable storage medium. Based on such understanding, the technical solution of the embodiments of the present disclosure essentially or partially contributes to the prior art, or all or part of the technical solution may be embodied in a form of a software product, and the computer software product is stored in a storage medium, and includes a plurality of instructions to cause a computer device (which may be a personal computer, a server, a network device, etc.) or processor to perform a part or all of the steps of the methods of various embodiments of the present disclosure. The storage medium for storing a computer software product includes various types of medium capable of storing program codes, such as a USB flash drive, a mobile disk, a read-only memory (ROM), a random-access memory (RAM), a magnetic disk, or an optical disk.

In a case of implementing the functions of the integrated module mentioned above in the form of hardware, the embodiments of the present disclosure provide a structural schematic diagram of a communication apparatus. As shown in FIG. 9, the communication apparatus 90 includes a processor 902, a communication interface 903, and a bus 904. In some embodiments of the present disclosure, the communication apparatus 90 may further include a memory 901.

The processor 902 may implement or execute various illustrative logical blocks, modules and circuits described in combination with the present disclosure. The processor 902 may be a central processing unit, a general-purpose processor, a digital signal processor, an application specific integrated circuit, a field programmable gate array or other programmable logic devices, a transistor logic device, a hardware component or any combination thereof. The processor 902 may implement or execute various illustrative logical blocks, modules and circuits described in combination with the present disclosure. The processor 902 may also be a combination that implements computing functions, for example, the processor 802 includes a combination of one or more microprocessors, a combination of a DSP (digital signal processor) and a microprocessor, or the like.

The communication interface 903 is configured to connect with other devices via a communication network. The communication network may be Ethernet, a wireless access network, a wireless local area network (WLAN), or the like.

The memory 901 may be, but is not limited to, a read-only memory (ROM) or a static storage device of any other type capable of storing static information and instructions, a random access memory (RAM) or a dynamic storage device of any other type capable of storing information and instructions, or an electrically erasable programmable read-only memory (EEPROM), a magnetic disk storage medium or any other magnetic disk storage device, or any other medium capable of being used to carry or store desired program codes and capable of being accessed by a computer, where the desired program codes have instructions or are in the form of data structure.

As a possible implementation, the memory 901 may exist independently of the processor 902, and the memory 901 may be connected to the processor 902 through the bus 904, and is used for storing instructions or program codes. The processor 902, when calling and executing the instructions or program codes stored in the memory 901, is capable of implementing the method provided in the present disclosure.

In another possible implementation, the memory 901 may also be integrated with the processor 902.

The bus 904 may be an extended industry standard architecture (EISA) bus or the like. Buses 904 may be divided into address buses, data buses, control buses, and the like. For ease of representation, only one bold line is used in FIG. 9 for representing the bus, but it does not mean that there is only one bus or one type of bus.

From description of the above embodiments, those skilled in the art may clearly understand that, for convenience and brevity of description, an example is only given according to the above division of functional modules. In practical applications, the above functions may be allocated to different functional devices as needed. That is, an internal structure of the apparatus or device is divided into different functional modules to perform all or part of the functions described above.

Some embodiments of the present disclosure further provide a computer-readable storage medium (including a non-transitory computer-readable storage medium). All or part of the processes in the above method embodiments may be instructed by computer instructions to be completed by the relevant hardware. The program may be stored in the computer-readable storage medium mentioned above, and when executed, the program may include the processes of the above method embodiments. The computer readable storage medium may be an internal storage unit or a memory of any one of the aforementioned embodiments. The above-mentioned computer-readable storage medium may also be an external storage device of the above-mentioned apparatus or device, such as a plug-in hard disk, a smart media card (SMC), a secure digital (SD) card, a flash card, etc., equipped on the above-mentioned apparatus or device. Furthermore, the above-mentioned computer readable storage medium may include both the internal storage unit and the external storage device of the above-mentioned apparatus or device. The above-mentioned computer readable storage medium is used to store the above-mentioned computer program and other programs and data required for the above-mentioned apparatus or device. The above-mentioned computer readable storage medium may also be used to temporarily store data that has been output or is to be output.

The embodiments of the present disclosure further provide a computer program product, and the computer program product includes computer programs that, when run on a computer, enable the computer to execute any one of the methods provided in the above-mentioned embodiments.

Although the present disclosure is described herein in conjunction with various embodiments, other variations of the disclosed embodiments may be understood and implemented by those skilled in the art by viewing the accompanying drawings, the disclosed contents, and the appended claims during the implementation of the present disclosure claimed to be protected. In the claims, the word "include/includes/including (comprising)" does not exclude other components or steps, and "a/an" or "one" does not exclude multiple cases. A single processor or other units may implement couples of functions listed in the claims. Some measures are recorded in different dependent claims, but this does not mean that these measures cannot be combined to produce good results.

Although the present disclosure is described in conjunction with the features and embodiments thereof, it is apparent that various modifications and combinations may be made thereto without departing from the spirit and scope of the present disclosure. Accordingly, the specification and accompanying drawings herein are merely exemplary illustration of the present disclosure defined by the claims, and are deemed to cover any and all modifications, variations, combinations or equivalents within the scope of the present disclosure. Obviously, those skilled in the art may make various modifications and variants to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations.

The aforementioned descriptions are merely specific implementations of the present disclosure, but the protection scope of the present disclosure is not limited thereto, and any changes or substitutions within the scope of the technologies disclosed in the present disclosure should be covered within the protection scope of the present disclosure. Therefore, the protection scope of the present disclosure should be based on the protection scope of claims.

## Claims

1. A communication method, applied to a first node, wherein the method comprises:
sending auxiliary information, wherein the auxiliary information is used to assist a second node in identifying a first information processing mode;
receiving a monitoring result of a second information processing mode sent from the second node, wherein the second information processing mode belongs to the first information processing mode; and
sending a management instruction for the second information processing mode to the second node based on the monitoring result.

2. The method according to claim 1, wherein the auxiliary information includes at least one of: an identifier of the first information processing mode, a configuration identifier, dataset information, a dataset identifier, environment information, an environment identifier, scenario information, a scenario identifier, site information, a site identifier, a cell identifier, an identifier of a network implementation mode adopted by the first node, codebook information, or a codebook identifier.

3. The method according to claim 1, wherein the auxiliary information is contained in a broadcast message or a dedicated signaling.

4. The method according to claim 1, wherein the monitoring result comprises at least one of: an identifier of the second information processing mode, a performance parameter of the second information processing mode, configuration information, scenario information corresponding to the second information processing mode, site information corresponding to the second information processing mode, and dataset information corresponding to the second information processing mode.

5. The method according to claim 1, wherein the management instruction is used to instruct any of the following operations on the second information processing mode: activation, deactivation, selection, update, or switching.

6. The method according to claim 1, wherein before the receiving the monitoring result of the second information processing mode sent from the second node, the method further comprises:
sending indication information of a preset condition to the second node.

7. The method according to claim 6, wherein the preset condition is based on one or more settings of: link-level performance, system-level performance, information processing accuracy, an information processing error value, a data distribution parameter, a performance index, a timer, and a counter of the second information processing mode.

8. The method according to claim 6, wherein the monitoring result of the second information processing mode sent from the second node satisfies the preset condition.

9. The method according to claim 1, further comprising:
receiving relevant information of a third information processing mode sent from the second node, wherein the first information processing mode belongs to the third information processing mode, the relevant information of the third information processing mode includes at least one of: reference signal resource configuration, quantization configuration, channel state information reporting configuration, delay information of a management operation related to the third information processing mode, a configuration identifier corresponding to the third information processing mode, a scenario identifier corresponding to the third information processing mode, a site identifier corresponding to the third information processing mode, a dataset identifier corresponding to the third information processing mode, data distribution information corresponding to the third information processing mode, or performance information corresponding to the third information processing mode.

10. The method according to claim 1, further comprising:
receiving status information sent from the second node, wherein the status information includes at least one of: an identifier of an old information processing mode, first indication information, an identifier of a new information processing mode, or time information; wherein the first indication information is used to indicate whether the status information contains the identifier of the new information processing mode; the time information is used to characterize time required for the second node to deactivate the old information processing mode, or the time information is used to characterize time required for the second node to activate or switch to the new information processing mode.

11. The method according to claim 10, further comprising:
sending a response information for the status information to the second node.

12. The method according to claim 1, further comprising:
sending authorization information to the second node, wherein the authorization information is used to authorize the second node to perform a management operation on a fourth information processing mode.

13. The method according to claim 12, wherein the management operation comprises performing any of the following operations on the fourth information processing mode: activation, deactivation, selection, update, and switching.

14. The method according to claim 12, wherein the authorization information comprises at least one of: an identifier of the fourth information processing mode and authorization time.

15. The method according to any one of claims 2, 4, 10 or 14, wherein an identifier of an information processing mode comprises at least one of: an index of the information processing mode, a scenario identifier corresponding to the information processing mode, a site identifier corresponding to the information processing mode, a dataset identifier corresponding to the information processing mode, or a configuration identifier corresponding to the information processing mode.

16. The method according to claim 12, further comprising:
receiving feedback information sent from the second node, wherein the feedback information is used to instruct the second node to perform the management operation on the fourth information processing mode.

17. The method according to claim 16, wherein the feedback information comprises at least one of: a number of times the management operation is performed, or an identifier of the fourth information processing mode corresponding to the management operation.

18. The method according to claim 1, further comprising:
sending grouping information to the second node, wherein the grouping information is used to indicate an information processing mode belonging to a same group.

19. The method according to claim 18, wherein the management instruction is used to instruct any of the following operations on the second information processing mode and each information processing mode belonging to a same group as the second information processing mode: activation, deactivation, selection, update, or switching.

20. A communication method, applied to a second node, and the method comprising:
receiving auxiliary information, wherein the auxiliary information is used to assist the second node in identifying a first information processing mode;
performing performance monitoring on the first information processing mode based on the auxiliary information to obtain a monitoring result of a second information processing mode by, wherein the second information processing mode belongs to the first information processing mode;
sending the monitoring result to a first node;
receiving a management instruction for the second information processing mode.

21. The method according to claim 20, wherein the sending the monitoring result to the first node comprises:
sending the monitoring result to the first node after feedback time configured for the first node.

22. The method according to claim 20, wherein the auxiliary information comprises at least one of: an identifier of the first information processing mode, a configuration identifier, dataset information, a dataset identifier, environment information, an environment identifier, scenario information, a scenario identifier, site information, a site identifier, a cell identifier, an identifier of a network implementation mode adopted by the first node, codebook information, or a codebook identifier.

23. The method according to claim 20, wherein the auxiliary information is contained in a broadcast message or a dedicated signaling.

24. The method according to claim 20, wherein the monitoring result comprises at least one of: an identifier of the second information processing mode, a performance parameter of the second information processing mode, configuration information, scenario information corresponding to the second information processing mode, site information corresponding to the second information processing mode, or dataset information corresponding to the second information processing mode.

25. The method according to claim 20, wherein the management instruction is used to instruct any of the following operations on the second information processing mode: activation, deactivation, selection, update, or switching.

26. The method according to claim 20, wherein the sending the monitoring result to the first node, comprises:
sending the monitoring result to the first node in response that the monitoring result satisfies a preset condition.

27. The method according to claim 26, further comprising:
receiving indication information of the preset condition sent from the first node.

28. The method according to claim 26, wherein the preset condition is based on one or more settings of: link-level performance, system-level performance, information processing accuracy, an information processing error value, a data distribution parameter, a performance index, a timer, or a counter of the second information processing mode.

29. The method according to claim 20, further comprising:
sending relevant information of a third information processing mode to the first node, wherein the first information processing mode belongs to the third information processing mode, the relevant information of the third information processing mode includes at least one of: reference signal resource configuration, quantization configuration, channel state information reporting configuration, delay information of a management operation related to the third information processing mode, a configuration identifier corresponding to the third information processing mode, a scenario identifier corresponding to the third information processing mode, a site identifier corresponding to the third information processing mode, a dataset identifier corresponding to the third information processing mode, data distribution information corresponding to the third information processing mode, and performance information corresponding to the third information processing mode.

30. The method according to claim 20, further comprising:
sending status information, wherein the status information includes at least one of: an identifier of an old information processing mode, first indication information, an identifier of a new information processing mode, or time information; wherein the first indication information is used to indicate whether the status information contains the identifier of the new information processing mode; the time information is used to characterize time required for the second node to deactivate the old information processing mode, or the time information is used to characterize time required for the second node to activate or switch to the new information processing mode.

31. The method according to claim 30, further comprising:
receiving response information for the status information from the first node;
deactivating the old information processing mode based on the response information; activating the new information processing mode based on the response information; and, deactivating the old information processing mode and activating the new information processing mode based on the response information.

32. The method according to claim 20, further comprising:
receiving authorization information sent from the first node, wherein the authorization information is used to authorize the second node to perform a management operation on a fourth information processing mode.

33. The method according to claim 32, wherein the management operation includes performing any of the following operations on the fourth information processing mode: activation, deactivation, selection, update, or switching.

34. The method according to claim 32, wherein the authorization information includes at least one of: an identifier of the fourth information processing mode or authorization time.

35. The method according to any one of claims 22, 24, 30 or 34, wherein an identifier of an information processing mode comprises at least one of: an index of the information processing mode, a scenario identifier corresponding to the information processing mode, a site identifier corresponding to the information processing mode, a dataset identifier corresponding to the information processing mode, or a configuration identifier corresponding to the information processing mode.

36. The method according to claim 34, wherein the method further comprises:
performing the management operation on the fourth information processing mode within the authorized time.

37. The method according to claim 32, further comprising:
sending feedback information to the first node, wherein the feedback information is used to instruct the second node to perform the management operation on the fourth information processing mode.

38. The method according to claim 37, wherein the feedback information comprises at least one of: a number of times the management operation is performed, or an identifier of the fourth information processing mode corresponding to the management operation.

39. The method according to claim 20, further comprising:
receiving grouping information sent from the first node, wherein the grouping information is used to indicate an information processing mode belonging to a same group.

40. The method according to claim 39, further comprising:
receiving a management instruction sent from the first node on any processing mode in the same group;
performing a management operation on each processing mode in the same group, in response to the management instruction.

41. A communication apparatus, comprising a memory and a processor, wherein the memory is coupled to the processor, the memory is used to store instructions executable by the processor, the processor, upon executing the instructions, executes the method according to any one of claims 1 to 40.

42. A computer readable storage medium, wherein the computer readable storage medium has stored computer instructions thereon, and the computer instructions, upon being executed on a communication apparatus, enable the communication apparatus to perform the method according to any one of claims 1 to 40.
